# EUROPEAN PATENT APPLICATION

(11) **EP 2 911 104 A1**
(43) Date of publication of application: **26.08.2015**
(21) Application number: 15155722.0
(22) Date of filing: 19.02.2015
(51) Int. Cl.: G06Q 20/20, G06Q 20/34, G06Q 20/38, G06Q 30/02

(54) **Settlement terminal and program**

(30) Priority: 25.02.2014 JP 2014034380
(71) Applicant: Toshiba TEC Kabushiki Kaisha, Tokyo 141-8562 (JP)
(72) Inventor: Masuda, Takeshi, Shinagawa-ku, Tokyo 141-8562 (JP)
(74) Representative: Takeuchi, Maya

(57) **Abstract**

A settlement terminal includes a first reading unit, a settlement unit, a second reading unit, an association unit and an imparting unit. The first reading unit reads identification information from a storage medium used for a settlement process. The settlement unit executes a settlement process for a transaction by using the storage medium. The second reading unit reads point card identification information from a point card. The association unit associates the identification information of the storage medium with the point card identification information. The imparting unit imparts a point to the point card identification information. If the point card identification information is associated with the identification information, the imparting unit imparts the point to the point card identification information without passing through the second reading unit and the association unit.

## Description

### FIELD

Embodiments described herein relate generally to a settlement terminal and a program.

### BACKGROUND

As settlement means other than cash, for example, credit settlement is performed. Although the cash settlement is performed by a POS (Point Of Sales) terminal, the credit settlement is performed by a settlement terminal connected to the POS terminal. The settlement terminal executes a credit settlement process based on credit settlement information received from the POS terminal.

Recently, as the type of settlement diversifies, settlement processes other than the credit settlement increase. For example, debit settlement, electronic money settlement using a non-contact IC card or the like is performed. The settlement terminal can also deal with these settlements. Besides, the settlement terminal can also deal with a point imparting service to impart a shopping point according to the shopping.

In the case of the electronic money settlement using the non-contact IC card, the settlement can be performed by merely holding the card over a card reader and writer.

However, in the case of the electronic money settlement, in order to impart a shopping point, a point card must be read after the electronic money settlement is performed using the non-contact IC card, and this takes time.

Exemplary embodiments described herein provide a settlement terminal and a program, in which a shopping point can be imparted even if a point card is not used.

### DESCRIPTION OF THE DRAWINGS

FIG. 1 is a view showing a structure of a POS system of an embodiment.
FIG. 2 is a perspective view showing an outer appearance of a settlement terminal.
FIG. 3 is a block diagram showing a hardware structure of the settlement terminal.
FIG. 4 is a conceptual view exemplifying a data structure of a settlement card management table.
FIG. 5 is a conceptual view exemplifying a data structure of a point card information table.
FIG. 6 is a functional block diagram showing a functional structure of the settlement terminal.
FIG. 7 is a flowchart showing a flow of an association process performed in the settlement terminal.
FIG. 8 is a front view showing an example of a confirmation screen.
FIG. 9 is a front view showing an example of a scan request screen.
FIG. 10 is a front view showing an example of a point imparting screen.
FIG. 11 is a flowchart showing a flow of a synchronization process performed in the settlement terminal.

### DETAILED DESCRIPTION

In general, according to one embodiment, a settlement terminal includes first reading means, settlement means, second reading means, association means and imparting means. The first reading means reads identification information to identify a storage medium from the storage medium used for a settlement process. The settlement means executes a settlement process for a transaction by using the storage medium. The second reading means reads point card identification information to identify a point card from the point card used for point impartation according to the settlement process. The association means associates the identification information of the storage medium read by the first reading means with the point card identification information read by the second reading means. The imparting means imparts a point to the point card identification information associated with the identification information of the storage medium by the association means. At the settlement process, if the point card identification information is associated with the identification information read by the first reading means, the imparting means imparts the point to the point card identification information without passing through the second reading means and the association means.

Hereinafter, an embodiment of a settlement terminal and a program will be described in detail with reference to the attached drawings. Incidentally, the embodiment described herein is merely one embodiment of the settlement terminal and the program, and does not limit the structure, specification and the like thereof. This embodiment is an application example to a settlement terminal which is introduced into a store such as a supermarket and is for settling a transaction.

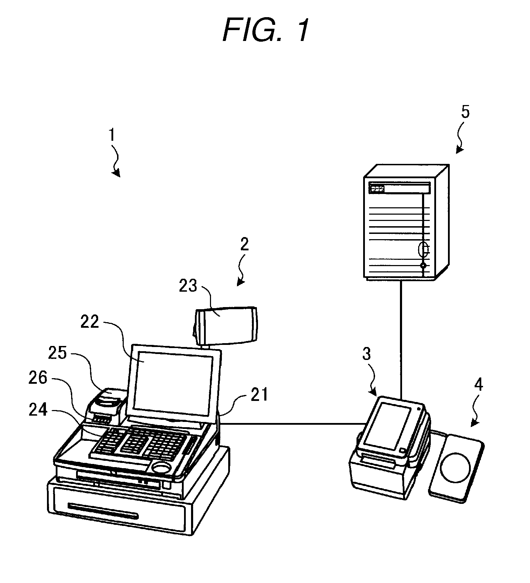

FIG. 1 is a view showing a structure of a POS system 1 of this embodiment. As shown in FIG. 1, the POS system 1 includes a POS terminal 2 as a sales registration apparatus, a settlement terminal 3 and a center server 5. Besides, the POS system 1 includes an electronic money terminal 4 connected to the settlement terminal 3. In the POS system 1, the POS terminal 2, the settlement terminal 3 and the center server 5 are communicably connected through wired or wireless.

The settlement terminal 3 is an apparatus having a settlement function in which card information is read from an IC card or a magnetic card, and a card settlement process is performed by communicating with a server of a card company.

The electronic money terminal 4 is a terminal which accesses a non-contact card electrically storing money information by using an NFC (Near field communication) technique and executes a settlement process by using the money information stored in the card.

The POS terminal 2 is an apparatus to perform an accounting process of a commodity purchased by a customer, and performs a settlement process for one transaction in the case of cash settlement. Besides, when settlement using a card such as a credit card or a debit card is performed, the POS terminal 2 is linked with the settlement terminal 3 and performs a settlement process (card settlement process) for one transaction.

As shown in FIG. 1, a display part 22 for a salesclerk and a display part 23 for a customer are provided at an upper part of a main body 21 of the POS terminal 2. Each of the display parts 22 and 23 includes an LCD (Liquid Crystal Display) or an LCD in which a touch panel is disposed on the surface, and displays a name of a commodity, an amount of money, a total amount of money for one transaction, and the like. Besides, in the POS terminal 2, a keyboard 24 is disposed on an upper surface of the main body 21, and a cash settlement key, a credit settlement key and the like for selecting a settlement method such as cash settlement or credit settlement are provided. Further, in the POS terminal 2, a printer 25 for printing a receipt and the like is provided in the inside of the main body 21. A receipt sheet printed by the printer 25 is discharged from a receipt issue port 26 provided at an upper part of the main body 21.

The center server 5 performs a negative check of a card for an authentication request for a settlement process from the settlement terminal 3, and then transmits a command for executing authentication to the settlement terminal 3. The negative check is a process of checking the validity of a credit card of a user by comparing it with card data (negative data) provided from a credit card company.

Next, the settlement terminal 3 will be described in detail.

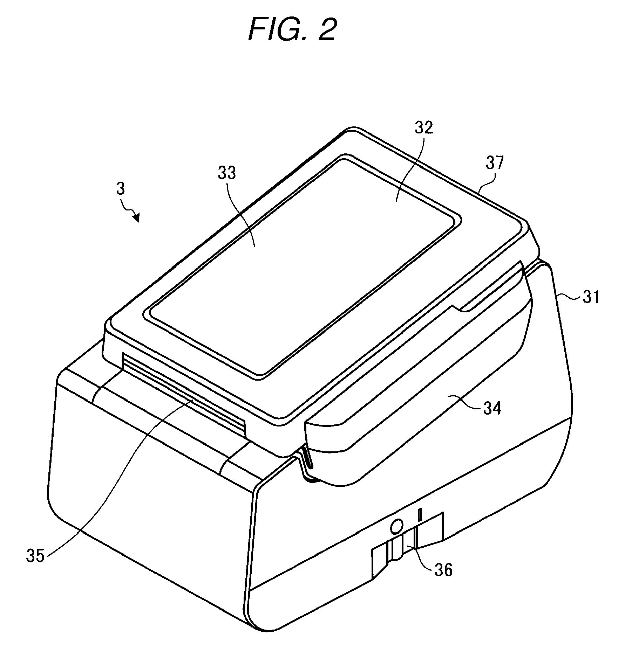

FIG. 2 is a perspective view showing an outer appearance of the settlement terminal 3. In the settlement terminal 3, a power supply switch 36 is provided at a side part of a main body 31. Besides, in the settlement terminal 3, an upper panel 37 capable of opening and closing with respect to the main body 31 is provided at an upper part of the main body 31. In the settlement terminal 3, when the upper panel 37 is opened, a roll-shaped receipt sheet can be set in the main body 31.

In the settlement terminal 3, a card reading part 34 to read information stored in a card for settlement is provided at a side upper part of the main body 31.

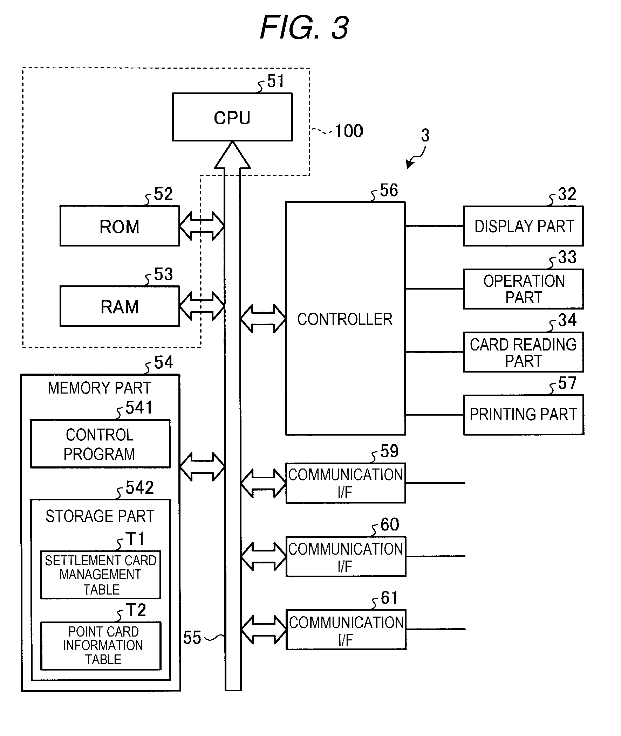

In the settlement terminal 3, a printing part 57 (see FIG. 3) to print information relating to settlement, sales report and the like on the receipt sheet is provided in the main body 31. The receipt sheet after printing is issued from a receipt issue port 35 provided between the main body 31 and the upper panel 37.

FIG. 3 is a block diagram showing a hardware structure of the settlement terminal 3.

The settlement terminal 3 includes a control part 100 for controlling respective parts. As shown in FIG. 3, the control part 100 is constructed by connecting a ROM (Read Only Memory) 52 and a RAM (Random Access Memory) 53 through a bus line 55, such as an address bus and a data bus, to a CPU (Central Processing Means) 51 to concentrically control the respective parts. Besides, the control part 100 is connected with a memory part 54 and a controller 56 through the bus line 55. The CPU 51 operates in accordance with a control program 541 which is stored in the memory part 54 and is expanded in the RAM 53, so that the control part 100 executes an after-mentioned control process. Besides, the RAM 53 temporarily stores information read from the memory part 54.

The controller 56 is connected with a display part 32 and an operation part 33. The controller 56 executes various controls based on instructions from the control part 100. The display part 32 displays various information including images of keys. The operation part 33 is a touch panel provided on the display part 32, and executes various key operations when the touch panel is touched at positions corresponding to the keys displayed on the display part 32.

Besides, the controller 56 is connected with the printing part 57 and the card reading part 34. The printing part 57 extracts the leading edge of the receipt sheet contained in the main body 31 and prints settlement information and the like on the receipt sheet by using, for example, a thermal head. The card reading part 34 reads card information stored in a settlement card or a point card magnetically or electrically.

Here, the settlement card is a card used for settlement, such as a credit card, a debit card or a non-contact IC card. The settlement card includes a storage medium storing identification information to identify the settlement card as information enabling settlement. The settlement terminal 3 can specify a customer by reading the identification information.

The point card is a card used for imparting a shopping point calculated according to a shopping amount for one transaction or the like. The point card stores the shopping point itself or point card identification information to identify the point card. Thus, the settlement terminal 3 can impart the shopping point by reading the point card.

The bus line 55 is connected with communication I/Fs (Interface) 59, 60 and 61. The communication I/F 59 is used for connection with the POS terminal 2. The communication I/F 60 is used for connection with the electronic money terminal 4. The communication I/F 61 is used for connection with the center server 5. The settlement terminal 3 transmits and receives information to and from the POS terminal 2, the electronic money terminal 4 and the center server 5 through the respective communication I/Fs 59, 60 and 61.

The memory part 54 is a nonvolatile memory, such as a flash memory, in which stored information is held even if power supply is turned off, and stores programs including the control program 541. The control program 541 includes a settlement program used at the settlement process of the settlement terminal 3 and a point imparting program used at a shopping point imparting process. The memory part 54 includes a storage part 542 storing various information. The storage part 542 includes a settlement card management table T1 and a point card information table T2.

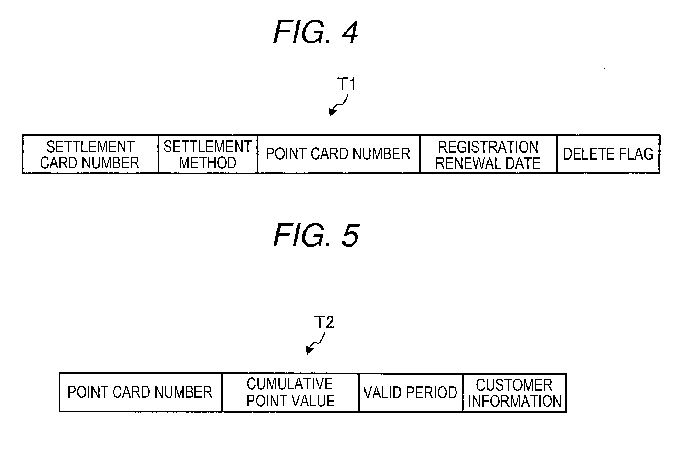

FIG. 4 is a conceptual view exemplifying a data structure of the settlement card management table T1. The settlement card management table T1 is a table for storing association information in which association between the settlement card used for settlement and the associated point card is stored. In more detail, the association information of the settlement card management table T1 includes a settlement card number, a settlement method, a point card number, a registration renewal date and a delete flag.

The settlement card number is the number of the settlement card and is identification information to identify the settlement card.

The settlement method represents the kind of the settlement card. For example, the settlement method represents a non-contact IC card, a credit card or a debit card.

The point card number is the number of the point card and is information to identify the point card.

The registration renewal date is a date when the information of the point card is renewed.

The delete flag is a flag storing whether or not the association between the settlement card and the point card is deleted. When the delete flag is invalid, the flag indicates a state where the association is kept. On the other hand, when the delete flag is valid, the flag indicates a state where the association is deleted.

FIG. 5 is a conceptual view exemplifying a data structure of the point card information table T2. The point card information table T2 is a table storing point card information. In more detail, the point card information of the point card information table T2 includes a point card number, a cumulative point value, a validity period and customer information.

The point card number is equal to the foregoing point card number and is information to identify the point card. The cumulative point value is the cumulative value of the shopping points imparted to the point card up to now. The validity period is the validity period of the point card. The customer information is the information relating to the customer, such as a name, a gender, an age, a job, an address and a telephone number.

The settlement card management table T1 and the point card information table T2 are stored also in the center server 5. The settlement terminal 3 periodically synchronizes the settlement card management table T1 and the point card information table T2 stored in the settlement terminal 3 with the settlement card management table T1 and the point card information table T2 stored in the center server 5. By this, the settlement terminal 3 can reflect association information and point card information of another shop.

Next, control of the settlement terminal 3 according to the embodiment will be described.

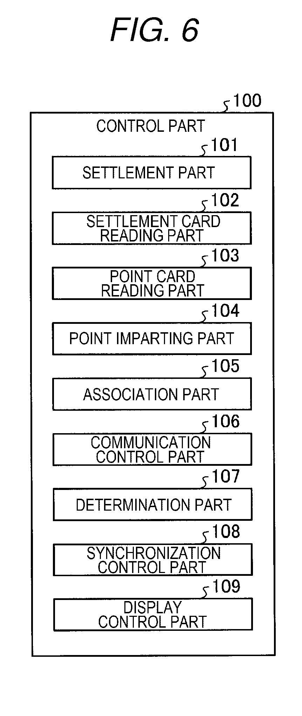

FIG. 6 is a functional block diagram showing a functional structure of the settlement terminal 3. In the settlement terminal 3, the control part 100 operates in accordance with the programs, such as the control program 541, stored in the memory part 54. By this, the settlement terminal 3 functions as a settlement part 101, a settlement card reading part 102, a point card reading part 103, a point imparting part 104, an association part 105, a communication control part 106, a determination part 107, a synchronization control part 108 and a display control part 109.

The settlement part 101 as settlement means uses a settlement card and execute a settlement process for one transaction.

The settlement card reading part 102 as first reading means reads settlement card identification information to identify a settlement card from the settlement card as a storage medium storing information enabling settlement.

The point card reading part 103 as second reading means reads point card identification information to identify a point card from the point card for storing a shopping point imparted according to a settlement process.

The point imparting part 104 as imparting means imparts a shopping point. In more detail, the point imparting part 104 imparts the shopping point for one transaction to the point card having the point card identification information associated with the settlement card identification information in the association information of the settlement card management table T1.

The association part 105 as association means generates the association information in which the settlement card identification information of the settlement card and the point identification information of the point card are associated. In more detail, when the settlement card read by the settlement card reading part 102 is used for the settlement process and the shopping point is imparted to the point card read by the point card reading part 103, the association part 105 associates the settlement card identification information with the point card identification information and generates the association information.

Besides, the association part 105 controls the delete flag of the association information. The association part 105 validates the delete flag when a shopping point is not imparted using the point card identification information associated with the settlement card identification information. The case where the shopping point is not imparted using the point card identification information associated with the settlement card identification information is, for example, a case where the shopping point is imparted to another point card.

Besides, the association part 105 validates the delete flag when the validity period of the point card having the point card identification information associated with the settlement card identification information expires in the association information of the settlement card management table T1. Then, in a synchronization process, the association part 105 generates delete information as information indicating that association is cancelled in the association information in which the delete flag is valid.

The communication control part 106 as communication control means controls communication with the center server 5.

The determination part 107 compares the settlement card management table T1 and the point card information table T2 received by the communication control part 106 from the center server 5 with the settlement card management table T1 and the point card information table T2 stored in the storage part 542 of the settlement terminal 3 and determines the presence or absence of difference. Further, the determination part 107 determines whether or not the association information and the point card information stored in the storage part 542 are included in the settlement card management table T1 and the point card information table T2 received from the center server 5.

The synchronization control part 108 as synchronization control means synchronizes the association information and the point card information of the settlement card management table T1 and the point card information table T2 stored in the storage part 542 with the association information and the point card information of the settlement card management table T1 and the point card information table T2 stored in the center server 5.

The synchronization control part 108 performs synchronization by causing the communication control part 106 to upload the delete information to the center server 5 as a host apparatus. Besides, the synchronization control part 108 performs synchronization by recording the association information and the point card information, which are determined by the determination part 107 to be not included in the center server 5, and by causing the communication control part 106 to upload the information to the center server 5.

The display control part 109 as display control means controls a screen to be displayed on the display part 32.

Next, an association process of the settlement terminal 3 included in the POS system 1 will be described in detail. Incidentally, as a precondition, a commodity registration process is assumed to be completed.

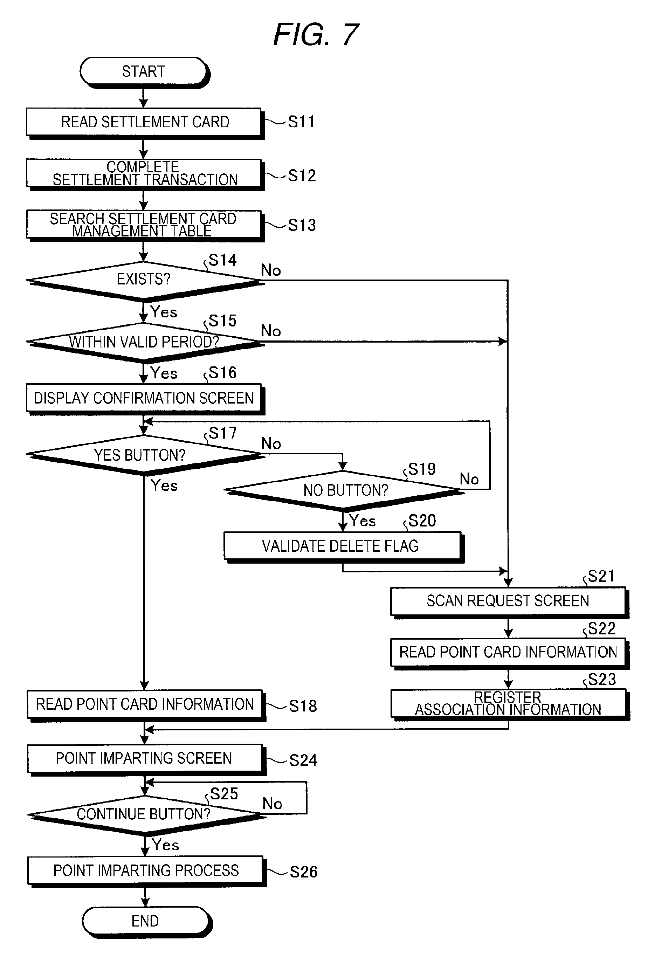

FIG. 7 is a flowchart showing a flow of the association process performed in the settlement terminal 3.

First, the control part 100 (the settlement card reading part 102) of the settlement terminal 3 reads the settlement card identification information from the settlement card (Act 11).

Next, the control part 100 (the settlement part 101) of the settlement terminal 3 completes a settlement transaction of the commodity registration process and an accounting process (Act 12).

Next, the control part 100 of the settlement terminal 3 uses the settlement card identification information of the settlement card and searches the settlement card management table T1 (Act 13).

Next, the control part determines whether or not the relevant settlement card identification information exists in the settlement card management table T1 (Act 14). If the relevant settlement card identification information does not exist (Act 14; No), the control part 100 of the settlement terminal 3 shifts to Act 21.

On the other hand, if the relevant settlement card identification information exists (Act 14; Yes), the control part 100 of the settlement terminal 3 determines whether or not the point card is within the valid period (Act 15). If the valid period of the point card expires (Act 15; No), the control part 100 of the settlement terminal 3 shifts to Act 21.

On the other hand, if the point card is within the valid period (Act 15; Yes), the control part 100 (the display control part 109) of the settlement terminal 3 displays a confirmation screen G1 (Act 16).

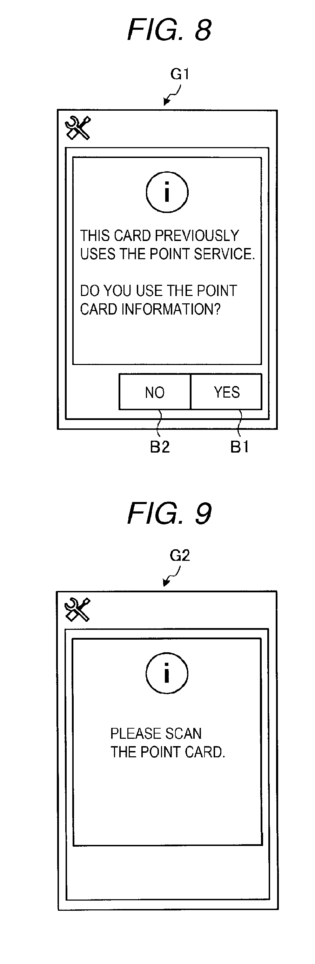

FIG. 8 is a front view showing an example of the confirmation screen G1.

The confirmation screen G1 is the screen for confirming whether or not the point card information associated with the settlement card is used. The confirmation screen G1 displays, for example, a message "This card previously uses the point service. Do you use the point card information?". Besides, the confirmation screen G1 includes a Yes button B1 and a No button B2. The Yes button B1 is depressed when the point card information is used. The No button B2 is depressed when the point card information is not used.

Thus, the control part 100 of the settlement terminal 3 determines whether or not the depression of the Yes button B1 is detected (Act 17). If the depression of the Yes button B1 is detected (Act 17; Yes), the control part 100 of the settlement terminal 3 reads the relevant point card information (Act 18).

On the other hand, if the depression of the Yes button B1 is not detected (Act 17; No), the control part 100 of the settlement terminal 3 determines whether or not the depression of the No button B2 is detected (Act 19). If the depression of the No button B2 is not detected (Act 19; No), the control part 100 of the settlement terminal 3 shifts to Act 17.

On the other hand, if the depression of the No button B2 is detected (Act 19; Yes), the control part 100 of the settlement terminal 3 validates the delete flag of the association information (Act 20).

Next, the control part 100 (the display control part 109) of the settlement terminal 3 displays a scan request screen G2 (Act 21).

FIG. 9 is a front view showing an example of the scan request screen G2.

The No button B2 of the confirmation screen G1 is depressed when the previously used point card information is not used. That is, the No button B2 is depressed when, for example, the shopping point is imparted to another point card. Thus, the scan request screen G2 displays, for example, a message "Please scan the point card" and requests scan of the point card.

The control part 100 (the point card reading part 103) of the settlement terminal 3 reads the point card information (Act 22). Next, the control part 100 (the association part 105) of the settlement terminal 3 uses the read point card information to generate association information, and registers the information in the settlement card management table T1 (Act 23).

Next, the control part 100 (the display control part 109) of the settlement terminal 3 displays a point imparting screen G3 (Act 24).

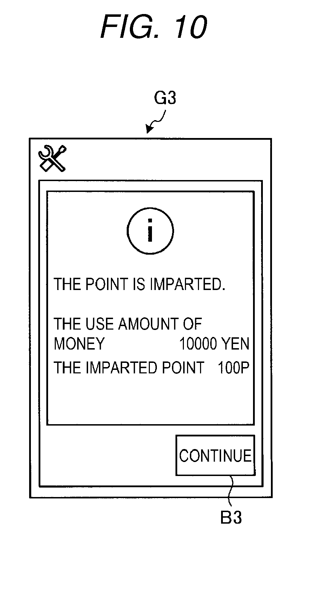

FIG. 10 is a front view showing an example of the point imparting screen G3.

The point imparting screen G3 is the screen on which the point to be imparted is displayed. The point imparting screen G3 displays, for example, a message "The point is imparted.". Besides, the point imparting screen G3 shown in FIG. 10 indicates that the use amount of money is 10000 yen and the imparted point is 100 points. Besides, the point imparting screen G3 includes a continue button B3. The continue button B3 is the button which is depressed when the point imparting is continued.

Thus, the control part 100 of the settlement terminal 3 determines whether or not the depression of the continue button B3 is detected (Act 25). If the depression of the continue button B3 is not detected (Act 25; No), the control part 100 of the settlement terminal 3 waits.

On the other hand, if the depression of the continue button B3 is detected (Act 25; Yes), the control part 100 of the settlement terminal 3 executes a point imparting process of adding the imparted shopping point to the point card information (Act 26) and ends the process.

Next, the synchronization process of the settlement card management table T1 and the point card information table T2 of the settlement terminal 3 of the POS system 1 will be described in detail. Incidentally, the center server 5 is assumed to exclusively control the synchronization process. In more detail, the center server 5 prohibits access to the settlement card management table T1 and the point card information table T2 from another settlement terminal 3 during the synchronization process. This is for keeping consistency between the settlement card management table T1 and the point card information table T2.

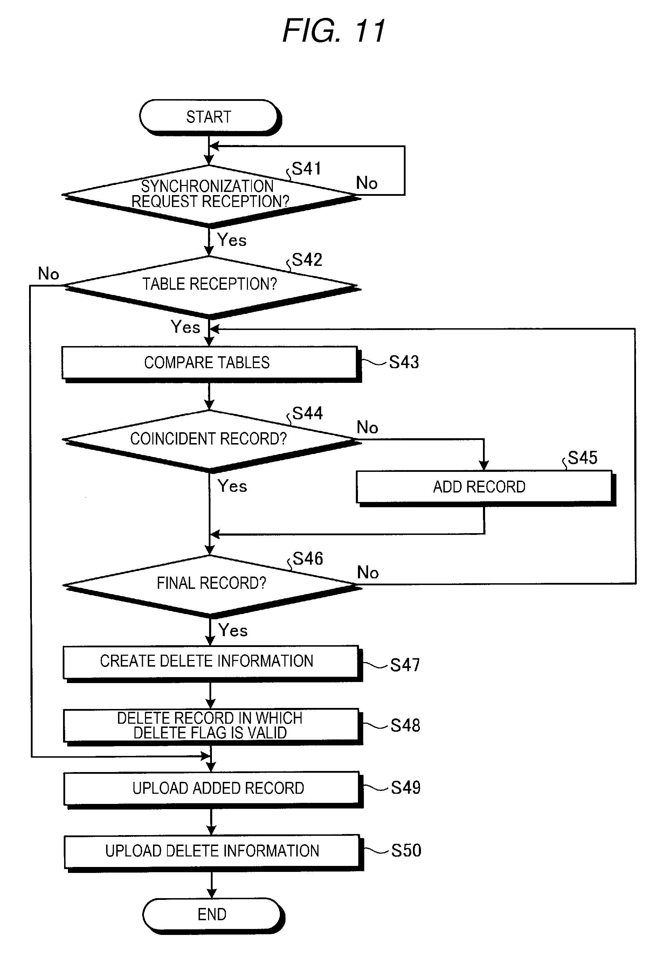

FIG. 11 is a flowchart showing a flow of the synchronization process performed by the settlement terminal 3.

First, the control part 100 of the settlement terminal 3 determines whether or not a synchronization request for the settlement card management table T1 and the point card information table T2 is received from the center server 5 (Act 41). If the synchronization request is not received (Act 41; No), the control part 100 of the settlement terminal 3 waits.

If the synchronization request is received (Act 41; Yes), the control part 100 of the settlement terminal 3 determines whether or not the settlement card management table T1 and the point card information table T2 are received from the center server 5 (Act 42). For example, at the initial period when the operation of the POS system 1 starts, there is a case where the center server 5 does not store the settlement card management table T1 and the point card information table T2. In this case, there is a case where the center server 5 transmits the synchronization request, and does not transmit the settlement card management table T1 and the point card information table T2.

If the settlement card management table T1 and the point card information table T2 are not received (Act 42; No), the control part 100 of the settlement terminal 3 shifts to Act 49.

On the other hand, if the settlement card management table T1 and the point card information table T2 are received (Act 42; Yes), the control part 100 of the settlement terminal 3 compares the received settlement card management table T1 and the point card information table T2 with the settlement card management table T1 and the point card information table T2 stored in the storage part 542 (Act 43).

Next, the control part 100 of the settlement terminal 3 determines whether or not records coincident with records of the respective tables stored in the storage part 542 are included in the received tables (Act 44). Specifically, the control part 100 of the settlement terminal 3 determines whether or not the association information and the point card information of the settlement card management table T1 and the point card information table T2 stored in the storage part 542 are included in the received settlement card management table T1 and the point card information table T2.

If the coincident records are included (Act 44; Yes), the control part 100 of the settlement terminal 3 shifts to Act 46.

On the other hand, if the coincident records are not included (Act 44; No), the control part 100 of the settlement terminal 3 adds a relevant record (Act 45). Specifically, the control part 100 of the settlement terminal 3 adds the association information or the point card information, which is determined not to be included in the received settlement card management table T1 and the point card information table T2, as an object to be transmitted to the center server 5.

Next, the control part 100 of the settlement terminal 3 determines whether or not the determination is completed to the final record of the respective tables stored in the storage part 542 (Act 46). If the determination is not completed to the final record (Act 46; No), the control part 100 of the settlement terminal 3 returns to Act 43.

On the other hand, if the determination is completed to the final record (ACT 46; Yes), the control part 100 of the settlement terminal 3 generates delete information (Act 47). Here, the delete information is a list of association information including a settlement card number in which the delete flag is valid. By this, the center server 5 can determine the association information to be deleted.

Next, the control part 100 of the settlement terminal 3 deletes the association information as the record in which the delete flag is valid (Act 48).

Next, the control part 100 of the settlement terminal 3 uploads the association information and the point card information as the added records to the center server 5 (Act 49).

Next, the control part 100 of the settlement terminal 3 uploads the delete information to the center server 5 (Act 50) and ends the process.

The center server 5 adds the received association information and the point card information, and deletes the association information specified by the received delete information. By this, the center server 5 synchronizes the settlement card management table T1 and the point card information table T2 of the center server 5 with the settlement card management table T1 and the point card information table T2 stored in the storage part 542 of the settlement terminal 3.

As described above, according to the POS system 1 of the embodiment, the settlement terminal 3 includes the storage part storing the association between the settlement card identification information to identify the settlement card and the point card identification information to identify the point card. The point imparting part 104 to impart the shopping point imparts the shopping point to the point card having the point card identification information associated with the settlement card identification information read by the settlement card reading part 102. Thus, the shopping point can be imparted without using the point card.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

Incidentally, in the embodiment, with respect to the association information, the description is made such that one piece of point identification information is associated with one piece of settlement card identification information. However, plural pieces of point card identification information may be associated with one piece of settlement card identification information. In this case, when the shopping point is imparted, selection of the point card to which the shopping point is imparted has only to be received.

Incidentally, in the embodiment, the description is made such that the settlement card management table T1 and the point card information table T2 are stored in the storage part 542 of the settlement terminal 3. However, the settlement card management table T1 and the point card information table T2 may be stored in a portion other than the storage part 542 of the settlement terminal 3. For example, the settlement card management table T1 and the point card information table T2 may be stored in the center server 5.

Besides, although the program executed in each apparatus of the embodiment is provided by being previously stored in a storage medium (ROM or storage part) of each apparatus, no limitation is made to this. The program may be provided by being recorded as an installable format or executable format file on a computer-readable recording medium such as a CD-ROM, a flexible disk (FD), a CD-R or a DVD (Digital Versatile Disk). Further, the storage medium is not limited to a medium independent of a computer or an embedded system, and includes a storage medium in which a program transmitted via a LAN or the Internet is downloaded and is stored or temporally stored.

Besides, the program executed by each apparatus of the embodiment is stored in a computer connected to a network such as the Internet, and may be provided by being downloaded via the network, and may be provided or distributed via the network such as the Internet.

## Claims

1. A settlement terminal comprising:
first reading means for reading identification information to identify a storage medium from the storage medium used for a settlement process;
settlement means for executing a settlement process for a transaction by using the storage medium;
second reading means for reading point card identification information to identify a point card from the point card used for point impartation according to the settlement process;
association means for associating the identification information of the storage medium read by the first reading means with the point card identification information read by the second reading means; and
imparting means for imparting a point to the point card identification information associated with the identification information of the storage medium by the association means, wherein
at the settlement process, if the point card identification information is associated with the identification information read by the first reading means, the imparting means imparts the point to the point card identification information without passing through the second reading means and the association means.

2. The terminal according to claim 1, further comprising
a storage part for storing information in which the identification information and the point card identification information are associated by the association means, and
synchronization means for synchronizing the information stored in the storage part with information stored in a host apparatus.

3. The terminal according to claim 2, wherein
the association means generates information indicating that association between the identification information and the point card identification information is cancelled, and
the synchronization control means synchronizes the information indicating that the association is cancelled with the information stored in the host apparatus.

4. The terminal according to claim 3, further comprising
display control means for displaying a screen for confirming whether the point is imparted using the point card identification information associated with the identification information, wherein
the association means generates the information indicating that the association is cancelled if non-use of the association is confirmed.

5. The terminal according to any one of claims 1 to 4, wherein the imparting means receives selection of the point card identification information as an object of the point impartation from a plurality of pieces of the point card identification information associated with one piece of the identification information.

6. A program for causing a computer to function as:
first reading means for reading identification information to identify a storage medium from the storage medium used for a settlement process;
settlement means for executing a settlement process for a transaction by using the storage medium;
second reading means for reading point card identification information to identify a point card from the point card used for point impartation according to the settlement process;
association means for associating the identification information of the storage medium read by the first reading means with the point card identification information read by the second reading means; and
imparting means for imparting a point to the point card identification information associated with the identification information of the storage medium by the association means, wherein
at the settlement process, if the point card identification information is associated with the identification information read by the first reading means, the imparting means imparts the point to the point card identification information without passing through the second reading means and the association means.
